# EUROPÄISCHE PATENTSCHRIFT

(11) **EP 0 535 304 B1**
(45) Veröffentlichungstag und Bekanntmachung des Hinweises auf die Patenterteilung: **04.10.1995**
(21) Anmeldenummer: 92108602.1
(22) Anmeldetag: 21.05.1992
(51) Int. Cl.: F03H 1/00, F02K 9/52

(54) **Triebwerk für Raumflugkörper**
Arcjet propulsion unit for a space vehicle
Propulseur pour véhicule spatial

(30) Priorität: 10.07.1991 DE 4122755
(43) Veröffentlichungstag der Anmeldung: 07.04.1993
(73) Patentinhaber: Daimler-Benz Aerospace Aktiengesellschaft, 80995 München (DE)
(72) Erfinder: Steenborg, Manfred, W-2863 Ritterhude (DE)
(74) Vertreter: Hansmann, Dierk, Dipl.-Ing.

(56) Entgegenhaltungen:
- EP-A- 0 207 731
- FR-A- 1 423 078
- FR-A- 2 333 405
- FR-A- 2 651 835
- GB-A- 2 093 484
- US-A- 4 288 982
- US-A- 4 926 632
- R.G. JAHN 'physics of electric propulsion' 1968
- AIAA/ASME/SAE/ASEE, 25th Joint Propulsion Conference, Monterey, july 10-12, 1989, Cathode erosion tests for 30kw arcjets, AIAA 89-2264, Pasadena Deininger, Chopra
- PATENT ABSTRACTS OF JAPAN vol. 9, no. 311 (M-436)(2034) 7. Dezember 1985 & JP-A-60 145 468

## Beschreibung

Die Erfindung betrifft ein Triebwerk, insbesondere für Raumflugkörper, bei dem zwischen einem als Anode und Expansionsdüse ausgebildeten Gehäuse sowie der Spitze einer in diesem angeordneten Kathode bei Gasströmung ein Lichtbogen gezündet wird, wobei die Kathode elektrisch isoliert in einer ersten, als Brennkammer ausgebildeten Ausnehmung des Gehäuses untergebracht ist und diese mit der Spitze mit kleinem Luftspalt beabstandet vor dem verengten Querschnitt der Expansionsdüse positioniert ist und wobei in die Brennkammer Treibgase eingespritzt werden.

Ein derartiges Triebwerk, das in der Fachwelt als Arcjet bezeichnet wird, ist unter anderem durch die Veröffentlichung "Cathode Erosion Tests for 30 kW Arcjets" vom W.D. Deininger, A. Chopra und K.D. Goodfellow, A/AA 89-2264, bekannt geworden, die aus Anlaß der Tagung A/AA/ASME/SAE/ASEE 25th Joint Propulsion Conference, Monterey, CA, July 10-12, 1989, erschienen ist. Das Treibgas, in der Regel Ammoniak (NH₃) oder ein durch thermische und/oder katalytische Zersetzung von Hydrazin (N₂H₄) erzeugtes Gemisch aus Ammoniak, Stickstoff- (N₂) und Wasserstoffgas (H₂) wird bei diesem bekannten Triebwerk durch eine in der Seitenwand der Brennkammer angebrachte Bohrung in die Brennkammer geleitet. Das Gas, das bei seinem Eintritt in die Brennkammer zunächst eine Temperatur in der Größenordnung von 500 - 600° C aufweist, erwärmt sich im Lichtbogen, der sich zwischen der Anode + Anschluß und Kathode - Anschluß bildet, auf Temperaturen von 10 - 15.000°C, bevor es die Expansionsdüse verläßt und dort den gewünschten Vortrieb erzeugt.

Der nach der Zündung bei Gasdurchströmung des Triebwerks sich aufbauende Lichtbogen erstreckt sich von der Anode (plus Anschluß) bis zu der im allgemeinen konisch ausgebildeten Spitze der Kathode (minus Anschluß) durch den Düsenhals, wobei der Lichtbogen, der sich zwischen Anode (Düse) und Kathode befindet, dem Treibgas den größten Teil seiner kinetischen Energie an das rotierende Gas im Düsenhals (Constrictor) überträgt. Dabei bildet sich der Lichtbogen genau auf der Mittelachse des Constrictors aus.

Der Bereich, in dem der Lichtbogen aus der Innenwand der Expansionsdüse austritt, ist mit Wandtemperaturen von über 2.000°C thermisch besonders hoch beansprucht. Um einen möglichst stabilen Lichtbogen zu erzielen, wird eine rotierende Strömung der Treibgase im Düsenhals angestrebt. Eine hohe Rotationsgeschwindigkeit der Treibgase ist dabei zugleich eine wichtige Voraussetzung dafür, daß sich im Bereich des Düsenhalses (Constrictor) eine möglichst eng anliegende Gasströmung ergibt und gleichzeitig aufgrund der hohen Geschwindigkeit bei der Rotation möglichst viel Wärme vom Lichtbogen auf das Gas übertragen wird.

Zur Erzielung eines rotierenden Gasstrahles wird bei derartigen Triebwerken das Treibgas in der Regel durch in der Seitenwand der Brennkammer oder in einem zwischen der Kathode und der diese umgebenden Anode vorgesehenen ringförmigen Isolator angeordnete Bohrungen mit einer tangentialen Strömungskomponente in die Brennkammer eingeleitet.

Aufgabe der Erfindung ist es, ein Triebwerk der eingangs genannten Art so auszubilden, daß der Verschleiß der einzelnen Komponenten besonders der Kathode aufgrund thermischer Beanspruchungen weitgehend verringert und dadurch die Standzeit eines solchen Triebwerkes wesentlich verbessert wird.

Die Erfindung löst diese Aufgabe durch ein Triebwerk mit den kennzeichnenden Merkmalen des Patentanspruchs 1. Vorteilhafte Weiterbildungen des erfindungsgemäßen Triebwerkes, die geeignet sind, die Beanspruchungen darüber hinaus noch weiter zu verringern, sind in den abhängigen Ansprüchen angegeben.

Es wird daraufhin gewiesen, daß aus der Patentschrift US-A-4 926 632 ein Triebwerk bekannt ist, bei dem auf die Gaszuführungsbohrungen Rhenium angebracht ist. FR-A-2 651 835 offenbart Gaszuführungen gebildet durch einen Injektor ausgestattet mit Nuten und die Anode, die an dem Injektor anliegt.

Die erfindungsgemäß vorgesehene Maßnahme, anstelle von Einspritzbohrungen unmittelbar in der zumeist aus Wolfram oder deren Legierungen bestehenden Brennkammerwand oder dem aus pyrolitischem Bornitrid bestehenden Isolator separate Einspritzelemente vorzusehen, bringt dabei eine Reihe von Vorteilen mit sich. Während Bohrungen in Werkstoffe wie Wolfram nicht mit beliebig klein dimensionierten Durchmessern herstellbar sind, können die Innendurchmesser und Formen der separaten Einspritzelemente so gewählt werden, daß sich die Einspritzgeschwindigkeiten wesentlich erhöhen.

Zudem kann durch entsprechende Formgebung der Einspritzelemente die gesamte Gasführung bis in den Bereich der Expansionsdüse vorteilhaft beeinflußt werden. Weiterhin kann dadurch, daß in weiterer Ausgestaltung der Erfindung zwei Einspritzrohre unterschiedlicher Durchmesser und Länge gewählt werden, erreicht werden, daß für die Zündung des Triebwerkes zunächst nur eine kleine Gasmenge eingespritzt wird, um die speziell bei der Zündung verstärkt auftretende Erosion an der Kathode zu vermindern und zeitlich danach der gesamte Treibstoffdurchsatz erfolgt gemäß dem Druckgefälle.

Als Folge ergeben sich hieraus insgesamt erhebliche Vorteile für das gesamte Triebwerk, die sich wie folgt zusammenfassen lassen:
- Das Triebwerk nach der Erfindung weist eine einfache und kostengünstige Konstruktion auf, bei der zudem das Gewicht verringert werden konnte.
- Infolge der höheren Einspritzgeschwindigkeiten durch die Einspritzelemente ergeben sich gute Reynoldszahlen und damit gute Möglichkeiten der Wärmeabfuhr aus den thermisch besonders beanspruchten Bereichen.
- Die Verwendung von Werkstoffen wie Rhenium oder deren Liegierungen zur Herstellung der rohrförmigen Einspritzelemente eröffnet vielfache Gestaltungsmöglichkeiten, da dieser Werkstoff auch bei Raumtemperatur gut verformbar ist.
- Durch die Verwendung von Rohren zur Führung der Treibgase in die Triebwerkskammer wird eine leichte Bauweise erreicht unter dem besonderen Aspekt kleiner verwendeter Rohrdurchmesser. Diese Bauweise läßt aufgrund geringer druckbeaufschlagter Querschnitte höhere Betriebstemperaturen unter Beibehaltung der Materialfestigkeit zu. Der Vorteil ist eine schnelle Erwärmung des Triebwerkes und damit eine schnelle Erzielung des angestrebten hohen spezifischen Impulses.
- Wegen des geringen erforderlichen Düsenhalsdurchmessers kann auch seine Länge reduziert werden, da durch die hohe Rotationsgeschwindigkeit des Treibgases im Düsenhals und den daraus resultierenden hohen Gasgeschwindigkeiten der Lichtbogen genügend Wärme auf das Gas übertragen kann. Der wesentliche Vorteil eines solchermaßen verkürzten Düsenhalses oder Constrictors liegt in der Möglichkeit, die Lichtbogenspannung zu reduzieren und dabei zugleich das Risiko zu senken, daß die Säule des Lichtbogens die Wand des Düsenhalses kontaktiert und dies zu einer Minderung des spezifischen Impulses des Triebwerkes führt (ungünstiger Betriebsmodus).
- Weiterhin führen die erfindungsgemäß vorgesehenen Einspritzelemente durch die erweiterten Möglichkeiten zur Beeinflussung der Geschwindigkeit und Richtung des in die Brennkammer eintretenden Treibgasstrahles zu einer verstärkten Rotation des Treibgases. Hieraus resultiert eine verbesserte anliegende Strömung. Dieses steigert die Zuverlässigkeit des Triebwerkes im Betrieb.
- Schließlich ist es möglich, ein Einspritzelement als spiralförmiges Rohr so anzuordnen, daß es den Bereich des Düsenhalses umgibt und dort gleichsam als Wärmetauscher wirkt. Auf diese Weise wird ein Teil der durch den Lichtbogen erzeugten Wärme aus diesem Bereich abgeführt, und die dadurch bewirkte gleichmäßigere Temperaturverteilung erhöht die Standzeit der thermisch extrem stark belasteten Werkstoffe im Bereich des Düsenhalses (Constrictor).

Dadurch, daß in weiterer Ausgestaltung der Erfindung eine Aufteilung der Treibgaszufuhr in der Weise vorgesehen ist, daß ein kleiner Teil des Gasstromes durch eine Bohrung in der Spitze der Kathode in die Brennkammer eintritt, kann dieser Gasstromanteil zugleich als Kühlmedium für die Kathodenspitze eingesetzt werden. Vorteilhafte Folge dieser Maßnahme ist eine aufgrund der Temperaturabsenkung in diesem Bereich verringerte Erosion, eine hohe Formbeständigkeit der Kathodenspitze und damit eine verbesserte Langzeitbeständigkeit der Kathode bzw. des gesamten Triebwerkes.

Nachfolgend soll die Erfindung anhand von in der Zeichnung dargestellten Ausführungsbeispielen näher erläutert werden. Es zeigen:
- Fig. 1: einen Schnitt durch ein erfindungsgemäßes Triebwerk,
- Fig. 2 und 3: zwei zueinander senkrechte Schnitte durch den Bereich der Brennkammer eines Triebwerkes gemäß Fig. 1,
- Fig. 4 bis 9: Schnittdarstellungen des Bereiches der Brennkammer bzw. des Düsenhalses in voneinander abweichenden Ausführungsformen und
- Fig. 10 bis 12: Detailschnitte unterschiedlicher Kathodenspitzen.

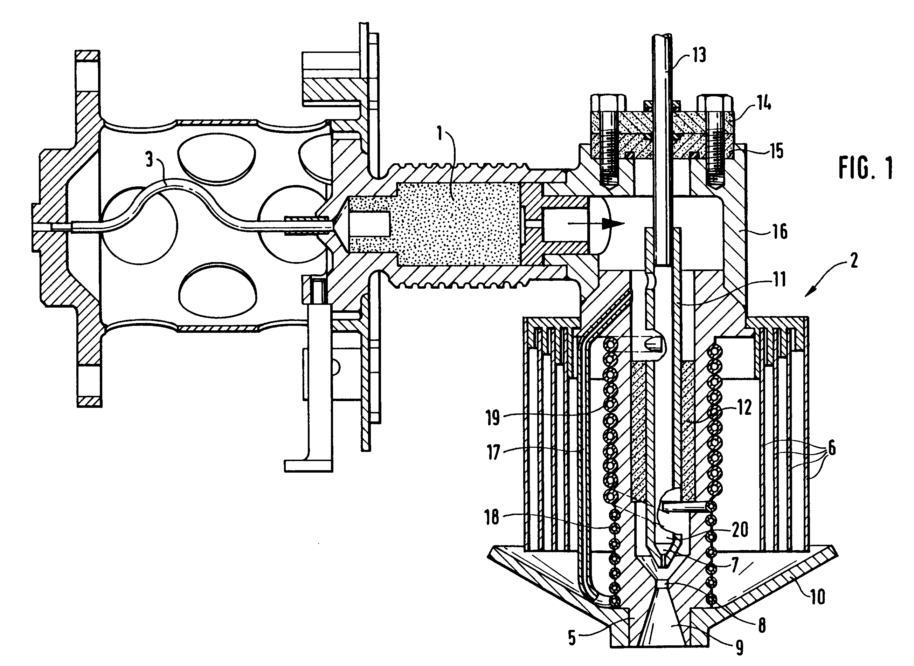

Bei der in Fig. 1 dargestellten Anordnung handelt es sich um ein Hochleistungstriebwerk, wie es unter anderem für die Bahn- und Lageregelung von Raumflugkörpern eingesetzt wird. Das Triebwerk umfaßt eine Zersetzungskammer 1, in der ein flüssiger Energieträger durch thermische und/oder katalytische Zersetzung in gasförmige Komponenten umgewandelt wird, die als Treibgase einem Lichtbogentriebwerk 2, einem sogenannten Arc-jet, zugeführt werden. Der flüssige Energieträger, im vorliegenden Fall Hydrazin (N₂H₄), befindet sich in einem hier nicht dargestellten Vorratsbehälter, von wo aus er über ein Einspritzrohr 3, das von einem Hitzeschild umgeben ist, in die Zersetzungskammer 1 gelangt. Letztere enthält eine poröse Füllung, die im Fall des hier dargestellten Ausführungsbeispiels aus einem Katalysator besteht. Die verwendeten Treibgase müssen nicht unbedingt aus zersetztem Hydratin, bestehend aus NH₃, H₂ uns N₂ Gasen, bestehen. Es ist ebenso die Verwendung von Inertgasen möglich. Die eingesetzten Gase müssen aber sauerstofffrei sein. Das Lichtbogentriebwerk 2 besteht aus einem im wesentlichen rotationssymmetrischen Gehäuse 5, das von einer mehrlagigen geteilten Außenisolation 6 umgeben ist und in dem in zentrischer Anordnung eine Brennkammer 7, ein sich daran anschließender Düsenhals oder Constrictor 8 sowie eine Expansionsdüse 9 vorgesehen sind. Die Austrittsöffnung der Expansionsdüse 9 ist von einer Abstrahlfläche 10 umgeben. Im Zentrum der Brennkammer 7 ist eine stabförmige, konisch zugespitzte Elektrode 11 angeordnet, die über einen zylindrischen Isolationseinsatz 12 gehaltert ist und die über einen Anschluß 13 mit dem Minuspol einer hier nicht dargestellten elektrischen Energieversorgungseinheit verbunden ist. Der Anschluß 13 ist über zwei Keramikplatten 14 und 15 an einem Adapter 16 gehaltert, der die Zersetzungskammer 1 mit dem Gehäuse 5 verbindet.

Der aus der Zersetzungskammer 1 austretende, durch einen Pfeil angedeutete Gasstrahl gelangt über den Adapter 16 in das Gehäuse 5, wo er auf drei Wegen in die Brennkammer 7 gelangt: Ein erster Teilstrahl strömt über einen Kanal 17 in ein erstes spiralförmiges Rohrsystem 18, das das Gehäuse 5 im Bereich der Expansionsdüse 9, des Düsenhalses 8 und der Spitze der als Kathode dienenden Elektrode 11 umgibt. Ein zweiter Teil strömt durch eine weitere spiralförmige Rohranordnung 19, während ein dritter Teilstrahl durch eine zentrische Bohrung 20 in der Kathode 11 in die Brennkammer 7 gelangt.

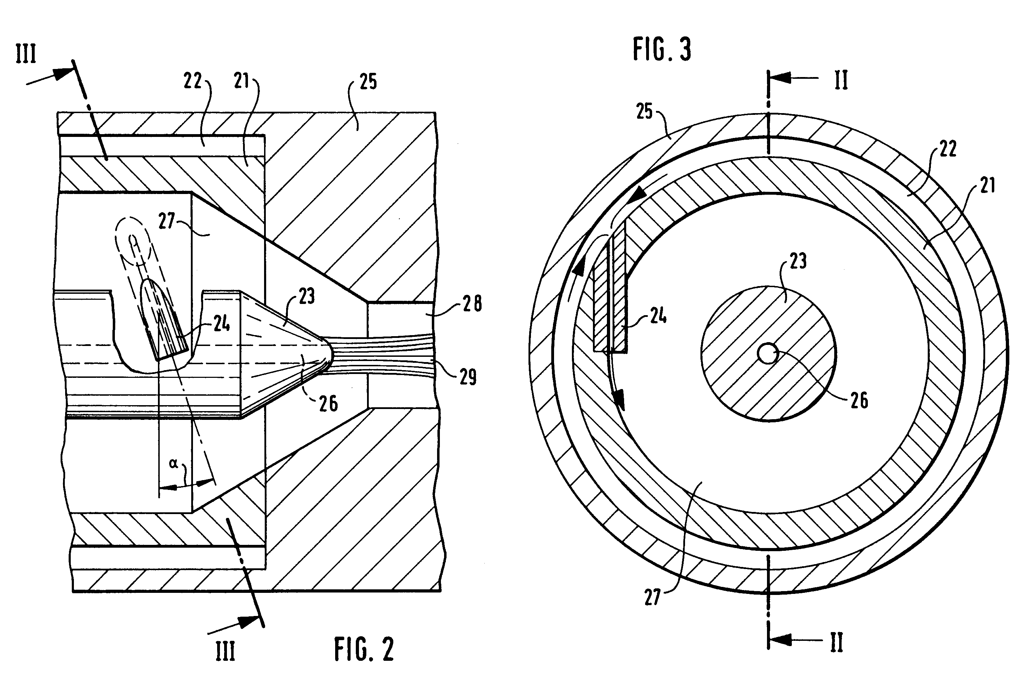

Detaillierte Darstellungen dieses Bereiches des Triebwerkes 2 sind für verschiedene Ausführungsformen in den Figuren 2 bis 9 enthalten, wobei in den Figuren 2 bis 7 zunächst solche Anordnungen dargestellt sind, bei denen die spiralförmigen Rohrsysteme 18 und 19 nicht vorgesehen sind.

Die Figuren 2 und 3 zeigen einen Schnitt durch ein Gehäuse 25, bei dem anstelle des zuvor beschriebenen Rohrsystems durch einen zylindrischen Einsatz 21 ein Hohlraum 22 gebildet wird, durch den das Treibgas in den Bereich der Spitze einer Kathode 23 gelangt. In eine Bohrung des Einsatzes 21 ist ein Rohrstück 24 aus Rhenium derart eingesetzt, daß das Treibgas, wie in Fig. 3 durch einen Pfeil angedeutet, die Wandflächen der Brennkammer 27 tangential anströmt. Zugleich ist, wie aus Fig. 2 ersichtlich, das Rohrstück 24 unter einem Winkel α in bezug auf die Querachse der Brennkammer 27 eingesetzt, so daß dem Gasstrom zusätzlich eine Bewegungskomponente in Richtung auf den Düsenhals 28 hin vermittelt wird.

Ein Teil des Gasstromes tritt ferner über eine zentrische Bohrung 26 über die Spitze der Kathode 23 in die Brennkammer 27 ein, wobei diese Treibgase unmittelbar in einen in Fig. 2 durch Schattierung angedeuteten Lichtbogen 29 gelangen, der zwischen der Anode (Gehäuse 25) und der im Gehäuse elektrisch isolierten Kathode (Minusanschluß 23) gezündet ist. Der Lichtbogen erstreckt sich dabei, eng gebündelt, durch den Düsenhals 28 hindurch zur Kathode, wo er aus der Innenwand dieser Expansionsdüse austritt.

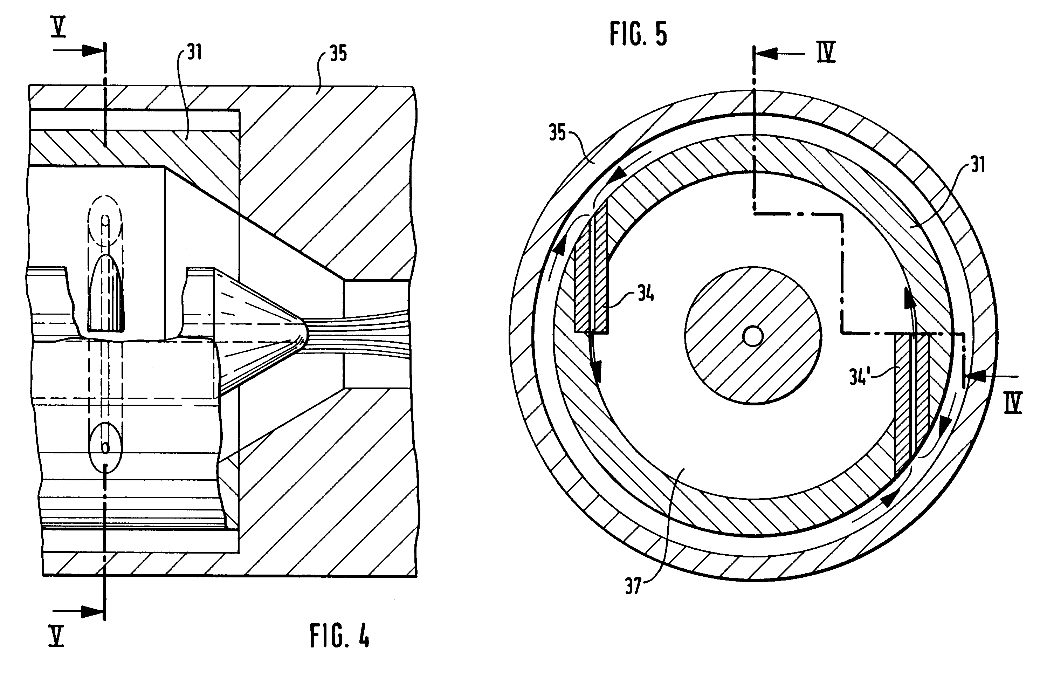

Die in den Figuren 4 und 5 dargestellte Anordnung unterscheidet sich von der vorangehend beschriebenen dadurch, daß in diesem Fall zwei Rohrstücke 34 und 34' in einen Einsatz 31 eines Gehäuses 35 eingeschweißt bzw. -gelötet sind. Auch in diesem Fall sind die Rohrstücke so angeordnet, daß das Treibgas die Innenwand der Brennkammer 37 tangential anströmt. Durch die zweigeteilte Gasführung ergibt sich dabei eine nochmals verbesserte Rotation der Treibgase. Indem Durchmesser und Länge der beiden Rohrstücke 34 und 34' unterschiedlich gewählt werden, ergibt sich ferner die Möglichkeit, durch das Rohr mit dem kleineren Innendurchmesser und der geringeren Länge nur eine kleine Gasmenge zur Zündung des Triebwerkes einzuspeisen, um so die insbesondere bei der Zündung auftretende Erosion an der Kathode zu verhindern und anschließend über das längere Rohr die für den stationären Betrieb erforderliche größere Gasmenge zuzuführen.

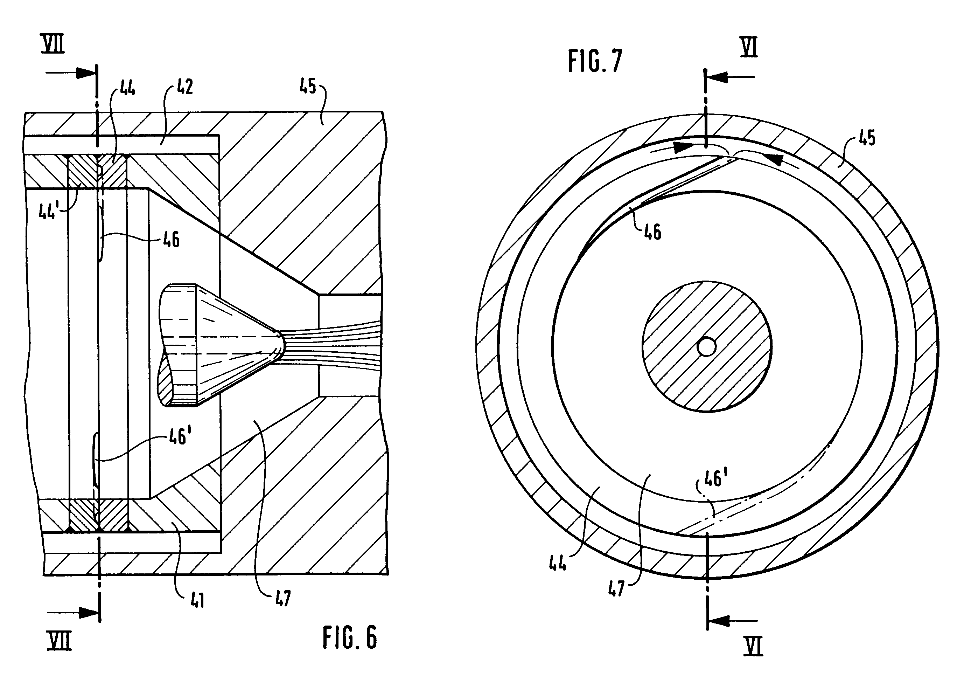

Das gleiche wird bei der in den Figuren 6 und 7 dargestellten Anordnung dadurch erreicht, daß in einen Einsatz 41, der wiederum in einem Gehäuse 45 gehaltert ist, zwei Scheiben 44 und 44' angeordnet sind, die mit Nuten 46 und 46' versehen sind. Die Nuten 46 und 46' erstrecken sich, wie aus Fig. 7 ersichtlich, vom Hohlraum 42 in die Brennkammer 47 und verlaufen derart, daß der Eintritt der Treibgase in die Brennkammer 47 auch in diesem Fall tangential zur Wand erfolgt. Die Nuten 46 und 46' können dabei sowohl kreisförmige als auch andere, beispielsweise rechteckige, Querschnitte aufweisen, die in die aus Werkstoffen wie Molybdän oder Wolfram bestehenden, zusammengeschweißten Scheiben 44 und 44' eingearbeitet sind.

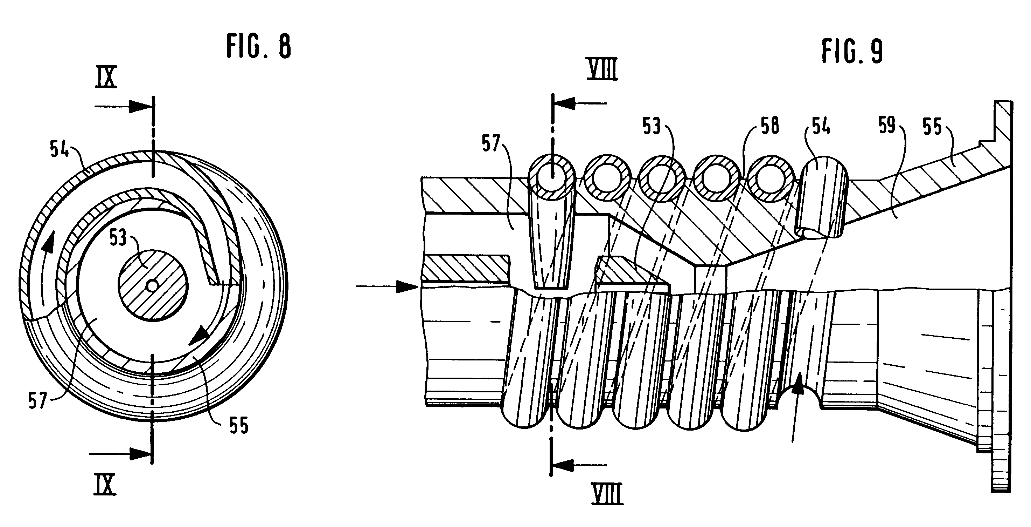

Während bei den in den Figuren 2 bis 7 gezeigten Anordnungen nur der eigentliche Einspritzbereich der Treibgaszuführung aus einem Rheniumrohr besteht, ist bei der in den Figuren 8 und 9 dargestellten Anordnung, wie auch schon in Fig. 1, die gesamte Gasführung in die Brennkammer 57, mit Ausnahme des durch die Kathode verlaufenden Teilstrahles, durch Rheniumrohre realisiert. Insbesondere das den Bereich der Kathodenspitze 53, des Düsenhalses 58 und der Expansionsdüse 59 spiralförmig umgebende Rohr 54, das teilweise in das Gehäuse 55 eingelassen ist, bewirkt eine nachhaltige Kühlung dieses thermisch hoch beanspruchten Triebwerksteils.

Das mit etwa 500 bis 600°C aus der Zersetzungskammer austretende Treibgas, ein Gemisch aus Stickstoff (N₂), Ammoniak (NH₃) und Wasserstoff (H₂) erwärmt sich dabei im Rohr 54, bevor es, wie durch die Pfeile in Fig. 8 angedeutet, tangential in die Brennkammer 57 strömt.

Ein zweiter Teilstrahl des vergleichsweise kühl aus der Zersetzungskammer kommenden Treibgases strömt auch in diesem Fall durch eine zentrische Bohrung der Kathode 53 in die Brennkammer 57 und kühlt dabei die Kathodenspitze so weit ab, daß ihre Erosion vermieden wird.

Durch diese geteilte Gasführung werden die Bereiche mit höchster thermischer Beanspruchung weitestgehend geschützt. Zusätzlich wird dadurch, daß das 500^{o}C warme Treibgas der Kathodenspitze durch die zentrische Bohrung von Beginn an Wärme zuführt, für die Kathode gleichsam ein Warmstart durchgeführt, der den Verschleiß an der Kathodenspitze wesentlich herabsetzt.

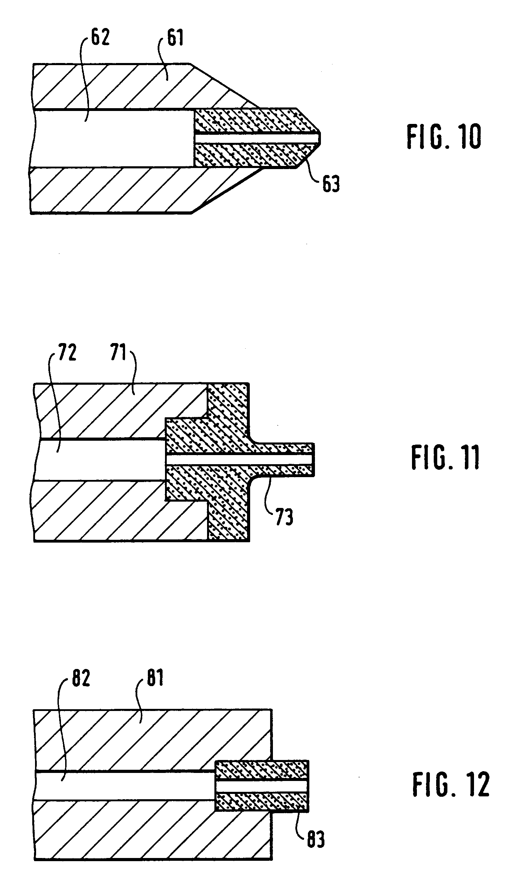

In den Figuren 10 bis 12 sind schließlich verschiedene Ausführungsformen der Kathodenspitze dargestellt, wobei in die mit einem zentrischen Strömungskanal 62,72 bzw. 82 versehene Kathode 61,71 bzw. 81 jeweils ein Einsatzkörper als separate Spitze 63,73 bzw. 83 eingesetzt ist. Die Spitzen 63,73 bzw. 83 sind in die Kathode eingeschweißt bzw. eingelötet und bestehen aus thoriertem Wolfram, während die Kathoden aus Rhenium oder Molybdän bzw. dessen Legierungen bestehen. Die Spitzen 63,73 und 83 weisen jeweils einen zylindrischen Bereich auf, der aus der Kathode herausragt und der sicherstellt, daß die Form der Kathodenspitze auch dann erhalten bleibt, wenn sich bei längerer Betriebsdauer trotz aller vorangehend geschilderten Präventivmaßnahmen Erosionserscheinungen zeigen, durch die sich die Spitzen verkürzen.

## Patentansprüche

1. Triebwerk, insbesondere für Raumflugkörper, bei dem zwischen einem als Anode und Expansionsdüse ausgebildeten Gehäuse sowie der Spitze einer in diesem angeordneten Kathode bei Gasströmung ein Lichtbogen gezündet wird, wobei die Kathode elektrisch isoliert in einer ersten, als Brennkammer ausgebildeten Ausnehmung des Gehäuses untergebracht ist und diese mit der Spitze mit kleinem Luftspalt beabstandet vor dem verengten Querschnitt der Expansionsdüse positioniert ist und wobei in die Brennkammer Treibgase eingespritzt werden, dadurch gekennzeichnet, daß in die Wand der Brennkammer (7,27,37,47,57) separate Einspritzelemente (18,19,24,34, 34',44,44',54) eingesetzt sind, die mit den Zuführungselementen (17,22,42) für die Treibgase verbunden sind.

2. Triebwerk nach Anspruch 1, dadurch gekennzeichnet, daß die Einspritzelemente als Rohrsegmente (24) ausgebildet sind, die derart in die Wand der Brennkammer (27) eingesetzt sind, daß die Treibgase tangential in die Brennkammer (27) eintreten.

3. Triebwerk nach Anspruch 2, dadurch gekennzeichnet, daß das Rohrsegment (24) unter einem Winkel zur Querachse der rotationssymmetrischen Brennkammer (27) eingesetzt ist.

4. Triebwerk nach Anspruch 2, dadurch gekennzeichnet, daß zwei Rohrsegmente (34,34') vorgesehen sind, die gegeneinander um 180 Grad versetzt in die Wand der Brennkammer (37) eingesetzt sind.

5. Triebwerk nach Anspruch 4, dadurch gekennzeichnet, daß die Rohrsegmente unterschiedliche Längen und Durchmesser derart aufweisen, daß das kürzere Rohrsegment einen geringeren Durchmesser als das längere Rohrsegment aufweist.

6. Triebwerk nach einem der Ansprüche 2 bis 5, dadurch gekennzeichnet, daß die Rohrsegmente (24,34,34') gekrümmt ausgebildet sind.

7. Triebwerk nach einem der Ansprüche 2 bis 6, dadurch gekennzeichnet, daß die Rohrsegmente in die Wand der Brennkammer (27,37) eingeschweißt sind.

8. Triebwerk nach Anspruch 1, dadurch gekennzeichnet, daß die Einspritzelemente als Spiralrohre (18,19,54) ausgebildet sind, die Teilbereiche des Innenraumes des Gehäuses (5,55) umgeben.

9. Triebwerk nach Anspruch 8, dadurch gekennzeichnet, daß ein Spiralrohr (54) den Bereich der Querschnittsverengung (58) sowie den Eintrittsbereich der Expansionsdüse (59) umgibt.

10. Triebwerk nach einem der Ansprüche 1 bis 9, dadurch gekennzeichnet, daß die Rohrsegmente (24,34,34') bzw. Spiralrohre (18,19,54) aus Rhenium bzw. Rheniumlegierungen bestehen.

11. Triebwerk nach Anspruch 1, dadurch gekennzeichnet, daß die Einspritzelemente als zwei flächig zusammengefügte Scheiben (44,44') ausgebildet sind, in deren Verbindungsflächen Nuten (46,46') eingearbeitet sind.

12. Triebwerk nach Anspruch 11, dadurch gekennzeichnet, daß die Scheiben (44,44') aus einem der Metalle Wolfram oder Molybdän bestehen oder deren Legierungen mit Rhenium oder aus Bornitrid angefertigt sind.

13. Triebwerk nach Anspruch 11 oder 12, dadurch gekennzeichnet, daß die Scheiben (44,44') zusammengeschweißt sind.

14. Triebwerk nach einem der Ansprüche 1 bis 13, dadurch gekennzeichnet, daß die Kathode (11,23,53,61,71,81) mit einer durchgehenden Bohrung (20,26,62,72,82) versehen ist, die mit der Zuführung für die Treibgase verbunden ist und die an der Spitze der Kathode (11,23,53,61,71,81) in die Brennkammer (7,27,37,47,57) mündet.

15. Triebwerk nach einem der Ansprüche 1 bis 14, dadurch gekennzeichnet, daß die Kathode (11,23,53,61,71,81) der Minusanschluß ist und das Gehäuse (Anode) (25,35,45,55) der Plusanschluß ist.

## Claims

1. Propulsion unit, in particular for space vehicles, in which an arc is ignited between a housing, which is formed as an anode and an expansion nozzle, and the tip of a cathode, which is arranged in this housing, when gas flows, the cathode being accommodated in an electrically insulated manner in a first recess, which is formed as a combustion chamber, of the housing and positioned with the tip at a spacing of a small air gap before the contracted cross section of the expansion nozzle, and fuel gases being injected into the combustion chamber, characterised in that separate injection elements (18, 19, 24, 34, 34', 44, 44', 54), which are connected to the supply elements (17, 22, 42) for the fuel gases, are inserted in the wall of the combustion chamber (7, 27, 37, 47, 57).

2. Propulsion unit according to claim 1, characterised in that the injection elements are formed as tubular segments (24) which are inserted in the wall of the combustion chamber (27) such that the fuel gases enter the combustion chamber (27) at a tangent.

3. Propulsion unit according to claim 2, characterised in that the tubular segment (24) is inserted at an angle to the transverse axis of the rotationally symmetrical combustion chamber (27).

4. Propulsion unit according to claim 2, characterised in that two tubular segments (34, 34') are provided which are inserted in the wall of the combustion chamber (37) such that they are staggered by 180 degrees.

5. Propulsion unit according to claim 4, characterised in that the tubular segments are of different lengths and diameters such that the shorter tubular segment has a smaller diameter than the longer tubular segment.

6. Propulsion unit according to one of claims 2 to 5, characterised in that the tubular segments (24, 34, 34') are curved.

7. Propulsion unit according to one of claims 2 to 6, characterised in that the tubular segments are welded into the wall of the combustion chamber (27, 37).

8. Propulsion unit according to claim 1, characterised in that the injection elements are formed as spiral tubes (18, 19, 54) which surround sub-areas of the interior space of the housing (5, 55).

9. Propulsion unit according to claim 8, characterised in that one spiral tube (54) surrounds the area of the contraction (58) of the cross section and the entry area of the expansion nozzle (59).

10. Propulsion unit according to one of claims 1 to 9, characterised in that the tubular segments (24, 34, 34') and spiral tubes (18, 19, 54) consist of rhenium or rhenium alloys.

11. Propulsion unit according to claim 1, characterised in that the injection elements are formed as two discs (44, 44') which are joined flatly together and into the connection faces of which grooves (46, 46') are worked.

12. Propulsion unit according to claim 11, characterised in that the discs (44, 44') consist of one of the metals tungsten and molybdenum or are produced from the alloys thereof with rhenium or from boron nitride.

13. Propulsion unit according to claim 11 or 12, characterised in that the discs (44, 44') are welded together.

14. Propulsion unit according to one of claims 1 to 13, characterised in that the cathode (11, 23, 53, 61, 71, 81) is provided with a through-bore (20, 26, 62, 72, 82), which is connected to the supply for the fuel gases and leads into the combustion chamber (7, 27, 37, 47, 57) at the tip of the cathode (11, 23, 53, 61, 71, 81).

15. Propulsion unit according to one of claims 1 to 14, characterised in that the cathode (11, 23, 53, 61, 71, 81) is the negative terminal and the housing (anode) (25, 35, 45, 55) is the positive terminal.

## Revendications

1. Groupe motopropulseur destiné en particulier à être monté sur un engin spatial et dans le cas duquel un arc électrique est allumé lors du passage du flux de gaz entre un boîtier conçu comme une anode et comme une tuyère divergente et la pointe d'une cathode disposée dans ce boîtier, la cathode étant isolée électriquement et étant insérée dans un premier logement du boîtier conçu comme une chambre de combustion, de même qu'elle est positionnée par sa pointe à une certaine distance formée par un petit écartement avant la section transversale réduite de la tuyère divergente, du gaz combustible étant injecté dans la chambre de combustion, groupe motopropulseur caractérisé en ce que des éléments d'injection séparés (18, 19, 24, 34, 34', 44, 44', 54) sont insérés dans la paroi de la chambre de combustion (7, 27, 37, 47, 57), ces éléments étant reliés aux éléments d'alimentation (17, 22, 42) du gaz combustible.

2. Groupe motopropulseur selon la revendication 1, caractérisé en ce que les éléments d'injection sont conçus comme des segments de canalisation (24), lesquels sont insérés dans la paroi de la chambre de combustion (27) de telle sorte que les gaz combustibles pénètrent dans la chambre de combustion (27) d'une façon tangentielle.

3. Groupe motopropulseur selon la revendication 2, caractérisé en ce que le segment de canalisation (24) est inséré selon un angle par rapport à l'axe transversal de la chambre de combustion (27) à symétrie de révolution.

4. Groupe motopropulseur selon la revendication 2, caractérisé en ce que deux segments de canalisation (34, 34') sont prévus, lesquels sont insérés dans la paroi de la chambre de combustion (37) en étant déplacés de 180° l'un par rapport à l'autre.

5. Groupe motopropulseur selon la revendication 4, caractérisé en ce que les segments de canalisation présentent des longueurs et des diamètres différents de telle sorte que le segment de canalisation le plus court présente un diamètre inférieur à celui du segment de canalisation le plus long.

6. Groupe motopropulseur selon l'une ou l'autre des revendications 2 à 5, caractérisé en ce que les segments de canalisation (24, 34, 34') sont conçus en forme de courbe.

7. Groupe motopropulseur selon l'une ou l'autre des revendications 2 à 6, caractérisé en ce que les segments de canalisation sont soudés dans la paroi de la chambre de combustion (27, 37).

8. Groupe motopropulseur selon la revendication 1, caractérisé en ce que les éléments d'injection sont conçus comme des serpentins (18, 19, 54) qui entourent des zones partielles de l'espace intérieur du boîtier (5, 55).

9. Groupe motopropulseur selon la revendication 8, caractérisé en ce que un serpentin (54) entoure la zone de rétrécissement de la section transversale (58) ainsi que le zone d'entrée de la tuyère divergente (59).

10. Groupe motopropulseur selon l'une ou l'autre des revendications 1 à 9, caractérisé en ce que les segments de canalisation (24, 34, 34'), respectivement le serpentins (18, 19, 54) sont fabriqués en rhénium respectivement en alliages de rhénium.

11. Groupe motopropulseur selon la revendication 1, caractérisé en ce que les éléments d'injection sont conçus comme deux disques réunis de forme plate (44, 44') dans les surfaces de soudage desquelles sont creusées des rainures (46, 46').

12. Groupe motopropulseur selon la revendication 11, caractérisé en ce que les disques (44, 44') sont fabriqués à partir de tungstène ou de molybdène ou en ce que leurs alliages sont fabriqués en rhénium ou en nitrure de bore.

13. Groupe motopropulseur selon l'une ou l'autre des revendications 11 et 12, caractérisé en ce que les disques (44, 44') sont soudés l'un à l'autre.

14. Groupe motopropulseur selon l'une ou l'autre des revendications 1 à 13, caractérisé en ce que les cathodes (11, 23, 53, 61, 71, 81) sont pourvues d'un alésage traversant (20, 26, 62, 72, 82) relié à l'entrée d'alimentation des gaz combustibles et débouchant dans la chambre de combustion (7, 27, 37, 47, 57) par la pointe de la cathode (11, 23, 53, 61, 71, 81).

15. Groupe motopropulseur selon l'une ou l'autre des revendications 1 à 14, caractérisé en ce que les cathodes (11, 23, 53, 61, 71, 81) correspondent au raccord négatif et en ce que les boîtiers (anodes) correspondent au raccord positif.
